# EUROPEAN PATENT APPLICATION

(11) **EP 0 713 899 A2**
(43) Date of publication of application: **29.05.1996**
(21) Application number: 95307454.9
(22) Date of filing: 19.10.1995
(51) Int. Cl.: C08K 5/00, A23L 3/3436

(54) **Oxygen scavenging composition**

(30) Priority: 19.10.1994 US 325844
(71) Applicant: W.R. Grace & Co.-Conn., New York New York 10036 (US)
(72) Inventor: Bradfute, John G., Greenville, South Carolina 29615 (US)
(74) Representative: Jones, Helen Marjorie Meredith

(57) **Abstract**

An oxygen scavenging composition comprises a copolymer derived from a monomer and a diene, the copolymer includes at least one unsaturated group from the diene; and a transition metal catalyst. A film or laminate made from this composition has at least one layer comprising a copolymer derived from a monomer and a diene, the copolymer including at least one unsaturated group from the diene; and a transition metal catalyst. The oxygen scavenging composition can comprise a terpolymer derived from a first and second monomer, and a diene, where the first and second monomers are different from each other, and wherein the terpolymer includes at least one unsaturated group from the diene.

## Description

It is well known that limiting the exposure of oxygen-sensitive products to oxygen maintains and enhances the quality and "shelf-life" of the product. For instance, by limiting the oxygen exposure of oxygen sensitive food products in a packaging system, the quality of the food product is maintained for a longer period of time, and food spoilage is reduced or delayed. In addition, such packaging also keeps the product in inventory longer, thereby reducing costs incurred from waste and having to restock. In the food packaging industry, several means for limiting oxygen exposure have already been developed. At present, the more commonly used means include modified atmosphere packaging (MAP), vacuum packaging and oxygen barrier film packaging. In the first two instances, reduced oxygen environments are employed in the packaging, while in the latter instance, oxygen is physically prevented from entering the packaging environment. Also, packets containing oxygen scavenging agents are sometimes placed in a package for an oxygen sensitive article. Such packets are supplied in the United States by W.R. Grace & Co.-Conn under the Ageless Trademark.

Another, more recent, means for limiting oxygen exposure involves incorporating an oxygen scavenger into the packaging structure. Incorporation of a scavenger in the package can provide a uniform scavenging effect throughout the package. In addition, such incorporation can provide a means of intercepting and scavenging oxygen as it is passing through the walls of the package (herein referred to as an "active oxygen barrier"), thereby maintaining the lowest possible oxygen level throughout the package.

One example of an oxygen scavenger incorporated into an oxygen scavenging system wall is illustrated in European Applications 301,719 and 380,319 as well as in PCT 90/00578 and 90/00504. See also U.S. Patent No. 5,021,515. The oxygen scavenger system disclosed in these patent applications comprises a transition metal catalyst and polyamide. Through catalyzed scavenging by the polyamide, the package wall regulates the amount of oxygen which reaches the interior of the package (active oxygen barrier). However, it has been found that the onset of useful oxygen scavenging by this wall, i.e. up to about 5 cubic centimeters (cc) oxygen per square meter per day at ambient conditions, may not occur for as long as 30 days. The delay before the onset of useful oxygen scavenging is referred to as the induction period.

In fact, other oxygen scavengers and walls which incorporate these scavengers may also exhibit an induction period. For instance oxygen scavengers comprising a transition metal catalyst and an ethylenically unsaturated compound, e.g. polybutadiene, polyisoprene, dehydrated castor oil, etc., may exhibit induction periods. When the oxygen scavenger comprises a polybutadiene, the induction period can exceed 30 days. Scavengers comprising polyisoprene or dehydrated castor oil typically have shorter induction periods, i.e. about fourteen- and one-day delays respectively. As is evident, the duration of induction periods depends on several factors, some of which are not completely understood or controlled. Accordingly, when using oxygen scavengers having longer induction periods, it will be required to keep the scavenger or oxygen scavenging layers and articles prepared therefrom in inventory prior to using them as scavengers in order to provide reliable scavenging behavior. On the other hand, when using scavengers having shorter induction periods, the layers and articles prepared therefrom will have to be prepared quickly and put to use in a short time period, sometimes immediately, in order to get the maximum effectiveness as a scavenger. Otherwise, they would have to be stored in an oxygen-free atmosphere which can be costly.

One method which could be employed to initiate scavenging on demand in packages for oxygen-sensitive foods involves incorporating photoxidizable rubber, e.g., cis-1,4-polyisoprene, and a photosensitizing dye into the inner surface of a package and then exposing it to visible light. See Rooney, M.L., "Oxygen Scavenging: A Novel Use of Rubber Photo-oxidation", Chemistry and Industry, March 20, 1982, pp. 197-198. However, while this method initiates oxygen scavenging within minutes, and thus allows one to initiate oxygen scavenging when desired, it requires constant exposure of the package to light to maintain the scavenging effect. Even further, because a dye is involved, it would be difficult to employ this method for applications which require colorless packaging, especially the transparent and usually colorless packaging used with food and beverage products.

U.S. Patent 5,211,875 discloses a method of initiating oxygen scavenging by a composition of a film of an oxidizable organic compound, as a substituted or unsubstituted ethylenically unsaturated hydrocarbon, and a transition metal catalyst, by exposing the composition to radiation.

It is a principal object of the present invention to provide an improved oxygen scavenging composition.

It is a further object of the present invention to provide an improved composition as aforesaid which can be conveniently prepared in film form and which can be readily prepared in multi-layer films.

Further objects and advantages of the present invention will appear hereinafter.

### SUMMARY OF THE INVENTION

In accordance with the present invention it has now been found that the foregoing objects and advantages can be readily obtained.

The invention is in one aspect an oxygen scavenging composition comprising a copolymer derived from a monomer and a diene, wherein the copolymer includes at least one unsaturated group from the diene; and a transition metal catalyst.

In another aspect, the invention is a film having at least one layer comprising a copolymer derived from a monomer and a diene, wherein the copolymer includes at least one unsaturated group from the diene; and a transition metal catalyst.

The oxygen scavenging composition can comprise a terpolymer derived from a first and second monomer, and a diene, wherein the first and second monomers are different from each other, and wherein the copolymer includes at least one unsaturated group from the diene.

The diene monomer is incorporated, preferably as a minor constituent, into a composition along with one or more preferably singly unsaturated monomers such as ethylene, propylene, etc. to form a copolymer, or preferably into a copolymer as a polyolefin, as linear, low density polyethylene (LLDPE), polypropylene or the like. Therefore, the composition of the present invention processes and in all other ways acts like a commodity material and thus provides a great deal of flexibility in end uses. Moreover, the composition of the present invention can readily be incorporated into multilayer films, such as coextruded films, or laminates and can if desired be used as any one or more of the sealant layer, tie layer, bulk layer, abuse layer, barrier layer or an auxiliary layer. The composition of the present invention provides significant advantages in food packaging either by itself or in a multi-layer film or laminate, especially where modification of the oxygen transmission characteristics of the film or laminate is desired.

Further features of the present invention will appear hereinafter.

### DETAILED DESCRIPTION OF PREFERRED EMBODIMENTS

Films or laminates made from the oxygen scavenging composition of the present invention offer the significant advantages of good oxygen scavenging properties in a relatively low cost, easily processed material. Thus, an oxidizable material may be incorporated into a relatively low cost material which can be easily extruded or coextruded. One can even use this material for food packaging without the necessity of providing additional layers of materials and thereby provide the functionality of several of the properties needed in a single material, for example, strength, low cost, easy processing and good oxygen scavenging properties. In addition, the film may if desired be monoaxially or biaxially oriented.

If the oxygen scavenging composition comprises a copolymer derived from a monomer and a diene, then the monomer is preferably an olefin, such as an alpha-olefin; more preferably a C₂ to C₄ olefin; and most preferably ethylene. If the oxygen scavenging composition comprises a terpolymer derived from a first and second monomer, and a diene, the first and second monomers are different from each other. The first monomer is preferably an olefin, such as an alpha-olefin; more preferably a C₂ to C₄ olefin; and most preferably ethylene. The second monomer is also preferably an olefin, such as an alpha-olefin; more preferably a C₄ to C₈ olefin; and more preferably 1-octene.

The diene monomer incorporated into the composition of the present invention provides the unsaturated groups and the oxygen scavenging properties. Typical dienes are preferably terminal dienes which may be either substituted or non-substituted and include octadienes, hexadienes, butadienes, non-conjugated dienes, heptadienes, pentadienes, dodecadienes. The octadienes are particularly useful, as 1,6-octadienes such as 7-methyl-1,6-octadiene, 5,7-dimethyl-1,6-octadiene, etc., where the terminal carbon atoms at both ends of the monomer (i.e., diene) are unsaturated.

Preferably, the transition metal catalyst is in the form of a salt, with the metal thereof selected from the first, second or third transition series of the Periodic Table. Suitable metals include, but are not limited to, manganese II or III, iron II or III, cobalt II or III, nickel II or III, copper I or II, rhodium II, III or IV, and ruthenium. The oxidation state of the metal when introduced is not necessarily that of the active form. The metal is preferably iron, nickel or copper, more preferably manganese and most preferably cobalt. Suitable counterions for the metal include, but are not limited to, chloride, acetate, stearate, palmitate, 2-ethylhexanoate, neodecanoate or naphthenate. Particularly preferable salts include cobalt (II) 2-ethylhexanoate and cobalt (II) neodecanoate. The metal salt may also be an ionomer, in which case a polymeric counterion is employed. Such ionomers are well known in the art.

The function of the copolymer or terpolymer with unsaturated end groups is to react irreversibly with oxygen during the scavenging process, while the function of the transition metal catalyst is to facilitate this process. During polymerization, the diene has one carbon to carbon double bond broken to be added to the chain of the growing polymer. The other is left intact as a site for the irreversible oxidation to occur.

If desired, the oxygen scavenging composition of the present invention can be used by itself or can readily be formed as a multilayer film or laminate including any one or more of an outside or abuse layer, a barrier layer, the oxygen-scavenging layer of the present invention, and a sealant layer. Thus, for example, the composition of the present invention may readily be extrusion coated to a barrier film.

The barrier layer is preferably an oxygen barrier which provides oxygen barrier resistance, desirable, for example, in packaging meat products. Preferred barrier layers include saran and ethylene vinyl alcohol copolymers (EVOH), polyamides or acrylonitrile copolymers, such as Barex 210. The term saran is used in its normal commercial sense to contemplate polymers made for example by polymerizing vinylidene chloride and vinyl chloride or methyl acrylate. Additional monomers may be included as is well known. Vinylidene chloride polymers are the most commonly used, but other oxygen barrier materials are also well known.

One may desirably include a tie layer or adhesive layer on one or both sides of the barrier layer. For example, one may utilize functionalized ethylene-vinyl acetate (EVA) copolymers with carboxylic acid or acid anhydride moieties grafted thereon, or EVA with high VA content, e.g., 18% vinyl acetate comonomer in EVA copolymers. Generally, the adhesive layer is quite thin, e.g., 2.5 µm in a 50µm laminate.

The barrier layer is desirably placed toward the outside of the film of the present invention. Therefore, oxygen which passes through the barrier layer is captured by the film of the present invention.

The outside layer or abuse layer can be a polyester or polyamide, polyolefin or polyurethane, for example. The sealant can be, for example, LLDPE, ethylene-propylene copolymers or a styrene-butadiene-styrene copolymer, an ionomer, ethylene vinyl acetate.

Also, the film and/or the laminate of the present invention may desirably be monoaxially or biaxially oriented to improve the properties thereof.

Naturally, the composition of the present invention may serve as the oxygen scavenging layer and/or the sealant layer. The sealant should be compatible with food in a food packaging application, which is an advantage of the composition of the present invention since it can readily be prepared from food-compatible components.

Naturally, other materials may be readily used in a multilayer film or laminate based on particular applications, as for example, a core layer of EVA with vinyl acetate content of 18% or greater, polyolefin, etc.

Further features and advantages of the present invention will appear from the following examples. In these examples, the composition was formulated in a Brabender mixing chamber with 10%, by weight of the overall formulation, of a masterbatch. The masterbatch itself comprised 95.5% by weight ethylene vinyl acetate copolymer, 3% by weight benzophenone, and 1.5% cobalt neodecanoate.

### Example 1

An oxygen scavenging composition comprising a terpolymer of ethylene, 1-octene, and a diene monomer including incorporated therein cobalt neodecanoate catalyst was prepared as described above. The material was pressed into film of 25 µm in thickness. The material included 43 unsaturations from the diene monomer for every 10,000 carbon atoms. After an induction period between 2 and 6 days, the material gave an average refrigerated (4.4°C) oxygen scavenging rate of 28 cc O₂/m per day, with a peak instantaneous rate of 34 cc O₂/m per day occurring after 26 days.

### Example 2

An oxygen scavenging composition like that of Example 1 was prepared, by the method discussed above, and pressed into film of 25 µm thickness. Room temperature scavenging rate was an average of about 120 cc O₂/m per day with an induction period of less than one day.

The oxygen scavenging composition of the present invention can form a layer of a coextruded multilayer film or laminate. Other processing techniques can also be used, such as extrusion coating, conventional lamination and extrusion lamination to incorporate the present composition into a film or laminate structure.

The composition and film of the present invention can also be cross-linked as by chemical means well known in the art, or cross-linked by subjecting the films to beta and/or gamma irradiation, and if oriented, before or after orientation. Films of the present invention which have been oriented can be further processed by heat setting the film to produce a low shrink, or shrink-free packaging material.

This invention may be embodied in other forms or carried out in other ways without departing from the spirit or essential characteristics thereof. The present embodiment is therefore to be considered as in all respects illustrative and not restrictive, the scope of the invention being indicated by the appended claims, and all changes which come within the meaning and range of equivalency are intended to be embraced therein.

For example, the term "film" in the claims is intended to refer to non-oriented and oriented films, such as shrink films, and also to laminates as described herein.

## Claims

1. An oxygen scavenging composition comprising:
a) a copolymer derived from a monomer and a diene, wherein the copolymer includes at least one unsaturated group from the diene; and
b) a transition metal catalyst.

2. The composition of claim 1, wherein the monomer comprises an olefin, preferably a C₂ to C₄ olefin, more preferably ethylene.

3. The composition of claim 1 or claim 2, comprising a terpolymer derived from a first and second monomer, and a diene, wherein the first and second monomers are different from each other, and wherein the terpolymer includes at least one unsaturated group from the diene.

4. The composition of claim 3, wherein at least one of the first and second monomer comprises an olefin, preferably a C₂ to C₄ olefin, more preferably wherein the first monomer comprises ethylene, and the second monomer comprises a C₄ to C₈ alpha olefin.

5. The composition of any preceding claim, wherein the diene comprises a terminal diene.

6. The composition of any preceding claim, wherein the transition metal catalyst comprises a cobalt salt.

7. A film having at least one layer comprising:
a) a copolymer derived from a monomer and a diene, wherein the copolymer includes at least one unsaturated group from the diene; and
b) a transition metal catalyst.

8. A film comprising at least the following layers:
a) an oxygen barrier polymeric layer;
b) an intermediate layer comprising:
i) a copolymer derived from a monomer and a diene, wherein the copolymer includes at least one unsaturated group from the diene; and
ii) a transition metal catalyst; and
c) a polymeric heat sealable layer.

9. The film of claim 8, wherein the copolymer in the intermediate layer comprises a terpolymer derived from a first and second monomer, and a diene, wherein the first and second monomers are different from each other.

10. The film of any of claims 7 to 9, wherein the film is oriented.

11. The film of any of claims 7 to 10, wherein the film is at least partially cross-linked.

12. A package made from the film of any of claims 7 to 11, preferably containing a food product.

13. A package according to claim 12 in which the film is a film according to claim 8 and the polymeric heat sealable layer has been heat sealed to close the package.
